# NEUE EUROPÄISCHE PATENTSCHRIFT

(11) **EP 0 609 558 B2**
(45) Veröffentlichungstag und Bekanntmachung des Hinweises auf die Entscheidung über den Einspruch: **04.10.2001**
(45) Hinweis auf die Patenterteilung: 11.09.1996
(21) Anmeldenummer: 93120883.9
(22) Anmeldetag: 24.12.1993
(51) Int. Cl.: B60J 3/02

(54) **Sonnenblende für Fahrzeuge**
Sun visor for vehicle
Pare-soleil pour véhicule

(30) Priorität: 30.01.1993 DE 4302607
(43) Veröffentlichungstag der Anmeldung: 10.08.1994
(73) Patentinhaber: Johnson Controls Interiors GmbH & Co. KG, 42285 Wuppertal (DE)
(72) Erfinder: Buchheit, Christian, F-57880 Ham Sous Vasberg (FR); Lecorvaisier, René, F-457470 Hombourg-Haut (FR)
(74) Vertreter: Grünecker, Kinkeldey, Stockmair & Schwanhäusser Anwaltssozietät

(56) Entgegenhaltungen:
- EP-A- 0 036 448
- EP-A- 0 314 652
- EP-A- 0 503 150
- EP-A- 0 528 879
- WO-A-91/17882
- DE-A- 4 227 646
- DE-A- 4 331 884
- FR-A- 2 278 228
- GB-A- 1 327 985
- US-A- 3 365 416
- US-A- 5 300 361
- "Verarbeitung von Plasten", VEB Deutscher Verlag für Grundstoffindustrie, Leipzig 1968
- "Kleine Enzyklopädie Technik", VEB Bibliographisches Institut, Leipzig 1984

## Beschreibung

Die Erfindung bezieht sich auf eine Sonnenblende für Fahrzeuge mit einem Sonnenblendenkörper, der aus Polypropylen-Partikelschaum besteht und der an einer Breitseite eine Vertiefung aufweist, in die ein von einem als aus Polypropylen bestehendes Spritzgußteil ausgebildeten Rahmen gehaltener Spiegel eingesetzt ist. Eine derartige Sonnenblende ist durch die EP-A- 0 503 150 bekanntgeworden.

Es ist allgemein bekannt, an den Sonnenblendenkörpern von Sonnenblenden Spiegel anzuordnen. Zur Befestigung des Spiegels am Sonnenblendenkörper werden verschiedene Systeme eingesetzt. So werden die Spiegelrahmen häufig mit einer den Sonnenblendenkörper umgebenden Umhüllung verschweißt, was aufwendig ist. Bei anderen herkömmlichen Befestigungssystemen weist der Sonnenblendenkörper örtlich eingeschäumte Einlagen mit Anbindungen zum Verkrallen, Verschrauben oder Verklipsen von am Spiegelrahmen angeordneten Halterungselementen auf. Der Nachteil hierbei ist in der aufwendigen Fertigung zu sehen.

Der Erfindung liegt hiernach die Aufgabe zugrunde, eine Sonnenblende der eingangs genannten Art so zu gestalten, daß auf aufwendige Befestigungsmanipulationen wie auch auf zusätzliche Einlageelemente im Sonnenblendenkörper verzichtet werden kann. Ferner wird eine rationelle und damit kostengünstige Fertigung sowie Wert auf eine Vereinfachung des Recyclings gelegt.

Diese Aufabe wird durch die im Kennzeichen des Anspruchs 1 enthaltenen Merkmale gelöst. Weitere Ausgestaltungen der Erfindung sind in den abhängigen Ansprüchen 2 und 3 angegeben.

Bei der Herstellung der erfindungsgemäßen Sonnenblende wird demnach ein Sonnenblendenkörper in herkömmlicher Weise geschäumt und ein Spiegelrahmen in herkömmlicher Weise gespritzt. Nach dem etwaigen Beziehen des Sonnenblendenkörpers mit einem Umhüllungsmaterial braucht lediglich noch der mit Spiegel bestückte Spiegelrahmen in die hierfür im Sonnenblendenkörper vorgesehene Vertiefung eingedrückt zu werden. Vor dem Eindrücken des Spiegelrahmens ist es jedoch zwecks Herstellung eher stoffschlüssigen Verbindung mit dem Material des Sonnenblendenkörpers erforderlich, eine partielle Materialerwärmung und Erweichung bis hin zum Anschmelzen herbeizuführen. Zweckmäßigerweise wird man dabei die partiellen Stegverlängerungen z. B. mittels eines Schweißspiegels entsprechend weit Erwärmen. Durch das Eindrücken des Spiegelrahmens dringen die Stegverlängerungen in das Material des Sonnenblendenkörpers ein, wobei es zur Verschmelzung und Herstellung einer unlösbaren Verbindung kommt. Wie Versuche gezeigt haben, läßt sich die so hergestellte stoffschlüssige Verbindung nur durch Materialzerstörung wieder lösen.

In Ausgestaltung der Erfindung kann noch vorgesehen sein, daß der Steg an seinem freien Endbereich eine umlaufende stufenförmige Absetzung aufweist, gegen die der Spiegel abgestützt ist und daß der Spiegel durch partielle durch Wärme- und Druckzufuhr erzeugte Materialverdrängung des freien Stegrandes zum rückseitigen Spiegelrand hin am Rahmen festgelegt ist. Die Materialverdrängung kann z. B. mittels eines erwärmten Dorns schnell und problemlos bewerkstelligt werden und führt zu einer zuverlässigen Festlegung des Spiegels am Spiegelrahmen.

Ein Ausführungsbeispiel der Erfindung wird nachfolgend anhand der Zeichnung näher erläutert. Es zeigen:
Fig. 1 eine Sonnenblende in ihrer Gebrauchsstellung,
Fig. 2 einen Schnitt II - II nach Fig. 1 und
Fig. 3 eine Einzelheit der Sonnenblende.

Die Sonnenblende umfaßt einen Sonnenblendenkörper 1, in dessen oberen Längskantenbereich 2 zeichnungslinksseitig eine Sonnenblendenachse 3 eingelagert ist. Die Sonnenblendenachse 3 ist anderendig in einem an der Fahrzeugkarosserie befestigbaren Lagerböckchen 4 gelagert. Zeichnungsrechtsseitig weist der Sonnenblendenkörper 1 einen, eine Ausnehmung 5 querenden Gegenlagerzapfen 6 auf, der lösbar in ein nicht gezeigtes Gegenlagerböckchen einrastbar ist.

Der Sonnenblendenkörper 1 ist aus Polypropylen-Partikelschaum gebildet und weist auf einer Breitseite eine Vertiefung 7 auf, in die ein von einem Rahmen 8 getragener Spiegel 9 eingesetzt ist. Der Rahmen 8 besteht aus einem aus Polypropylenmaterial gebildeten Spritzling und ist daher, ebenso wie der Sonnenblendenkörper, voll recyclebar.

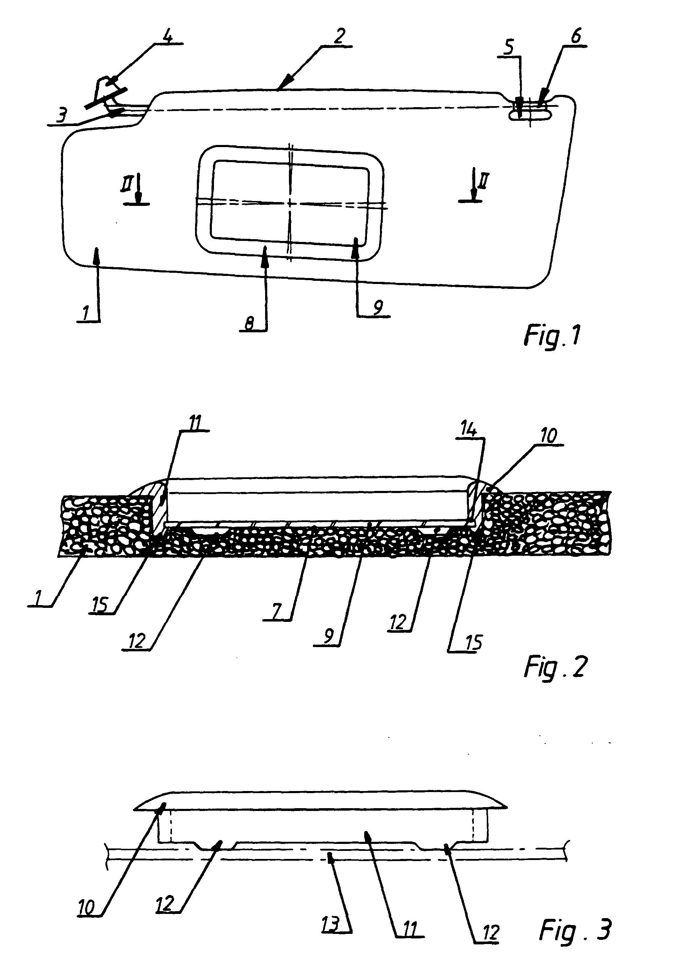

Der Rahmen 8 weist einen umlaufenden, sich auf dem Sonnenblendenkörper 1 abstützenden Flansch 10 und einen umlaufenden, etwa senkrecht zum Flansch 10 ausgerichteten, in die Vertiefung 7 eintauchenden Steg 11 mit partiell angeordneten Stegverlängerungen 12 auf. Die Stegverlängerungen 12 sind in der Schnittdarstellung nach Fig. 2 und noch deutlicher in der Seitenansicht des Rahmens 8 nach Fig. 3 gezeigt.

Die Verbindung des Rahmens 8 und Spiegel 9 mit dem Sonnenblendenkörper 1 erfolgt bevorzugt dadurch, daß an die Stegverlängerung 12 ein, in Fig. 3 strichpunktiert angedeuteter Schweißspiegel 13 angelegt wird, um die Stegverlängerungen 12 zu erwärmen und anzuschmelzen. Unmittelbar nach Wegnahme des Schweißspiegels 13 wird der Rahmen 8 in die Vertiefung 7 des Sonnenblendenkörpers 1 eingedrückt, wobei es zum Zusammenschmelzen von Sonnenblendenkörper- und Rahmen-Material kommt. Im Verbindungsbereich sind die Partikel des Sonnenblendenkörpers 1 verdichtet dargestellt.

Der Steg 11 des Rahmens 8 weist an seinem freien Endbereich eine umlaufende stufenförmige Absetzung 14 auf, gegen die der Spiegel 9 abgestützt ist. Dabei ist der Spiegel 9 durch partielle durch Wärme und Druckzufuhr erzeugte Materialverdrängung des freien Stegrandes, der auch hierfür Stegverlängerungen aufweisen kann, zum rückseitigen Spiegelrand hin am Rahmen 8 festgelegt. Die Festlegungspunkte sind mit 15 kenntlich gemacht.

## Patentansprüche

1. Sonnenblende für Fahrzeuge mit einem Sonnenblendenkörper (1), der aus Polypropylen-Partikelschaum besteht und der in einer Breitseite eine Vertiefung (7) aufweist, in die ein von einem als aus Polypropylen bestehendes Spritzgußteil ausgebildeten Rahmen (8) gehaltener Spiegel (9) eingesetzt ist, **dadurch gekennzeichnet, daß** der Rahmen (8) stoffschlüssig mit dem Sonnenblendenkörper (1) verbunden ist, wobei die stoffschlüssige Verbindung des mit Spiegel (9) bestückten Rahmens (8) durch dessen partielle, durch Materialerwärmung und Erweichung erzeugte Materialverdrängung bis hin zum Anschmelzen erfolgt ist, wobei der Rahmen (8) einen in die Vertiefung (7) eintauchenden Steg (11) mit partiell angeordneten Stegverlängerungen (12) aufweist, welche nach der vorherigen Erwärmung und Anschmelzung in den Boden der Vertiefung (7) eingepreßt und mit dem Material des Sonnenblendenkörpers (1) verschmolzen sind, wobei die Partikel des Sonnenblendenkörpers (1) verdichtet sind.

2. Sonnenblende nach Anspruch 1, **dadurch gekennzeichnet, daß** der Rahmen (8) einen umlaufenden, sich auf dem Sonnenblendenkörper (1) abstützenden Flansch (10) aufweist und der Steg (11) umlaufend angeordnet ist und etwa senkrecht zum Flansch (10) ausgerichtet ist.

3. Sonnenblende nach Anspruch 1 oder 2, **dadurch gekennzeichnet, daß** der Steg (11) an seinem freien Endbereich eine umlaufende stufenförmige Absetzung (14) aufweist, gegen die der Spiegel (9) abgestützt ist, und **daß** der Spiegel (9) durch partielle durch Wärme- und Druckzufuhr erzeugte Materialverdrängung des freien Stegrandes zum rückseitigen Spiegelrand hin am Rahmen (8) festgelegt ist.

## Claims

1. Sun visor for vehicles having a sun visor body (1) which consists of polypropylene particle foam and has a depression (7) in a wide side in which is inserted a mirror (9) supported by a frame (8) in the form of an injection-moulded part of polypropylene, **characterized in that** the frame (8) is linked with the sun visor body (1) in a material connection, the material connection of the frame (8) fitted with the mirror (9) taking place by means of its partial material displacement produced by heating and softening of the material until fusing on has taken place, the frame (8) having a rib (11) which is introduced into the depression (7), with partially disposed rib extensions (12) which are pressed after the previous heating and fusing on into the bottom of the depression (7) and are fused with the material of the sun visor body (1), with the particles of the sun visor body (1) being compressed.

2. Sun visor according to Claim 1, **characterized in that** the frame (8) has an encircling flange (10) supported on the sun visor body (1), and the rib (11) is arranged in an encircling manner and is orientated approximately vertically with respect to the flange (10).

3. Sun visor according to Claim 1 or 2, **characterized in that** the rib (11) has, on its free end region, an encircling, stepped offset (14), against which the mirror (9) is supported, and **in that** the mirror (9) is fixed to the frame (8) by partial material displacement, produced by the supply of heat and pressure, of the free edge of the rib towards the rear mirror edge.

## Revendications

1. Pare-soleil pour véhicules comportant un corps (1) de pare-soleil lequel est en mousse à particules de polypropylène et est pourvu, sur un de ses grands côtés, d'un creux (7) dans lequel est inséré un miroir (9) retenu par un cadre (8) sous forme de pièce en polypropylène moulée par injection, **caractérisé en ce que** le cadre (8) est relié, par accouplement de matière, au corps (1) du pare-soleil, la liaison par accouplement de matière du cadre (8) garni du miroir (9) ayant été accomplie par un déplacement partiel de la matière de celui-ci, jusqu'à presque atteindre la fusion, déplacement obtenu par chauffage de la matière et rammollissement, le cadre (8) étant pourvu d'une nervure (11) pénétrant dans le creux (7) avec des prolongements (12) de nervure partiellement mis en place, lesquels, après chauffage et fusion préalables, sont pressés au fond du creux (7) et fondus avec la matière du corps (1) du pare-soleil, les particules du corps (1) du pare-soleil étant comprimées.

2. Pare-soleil selon la revendication 1, **caractérisé en ce que** le cadre (8) est pourvu d'un rebord périmétral (10) lequel est supporté sur le corps (1) du pare-soleil, et la nervure (11) est disposée de façon périmétrale et est orientée sensiblement perpendiculaire au rebord (10).

3. Pare-soleil selon la revendication 1 ou 2, **caractérisé en ce que** la nervure (11) présente, à son aire extrême libre, un épaulement périmétral (14) en forme de gradin contre lequel est soutenu le miroir (9) et que le miroir (9) est fixé au cadre (8) au moyen d'un déplacement partiel de matière, grâce à une alimentation en chaleur et pression, à partir du bord libre de la nervure vers le bord arrière du miroir.
